Europäisches Patentamt

European Patent Office

Office européen des brevets

(19)

(11) Veröffentlichungsnummer: **0 318 797**
**A2**

(12) **EUROPÄISCHE PATENTANMELDUNG**

(21) Anmeldenummer: **88119384.1**

(22) Anmeldetag: **22.11.88**

(51) Int. Cl.⁴: **C08F 8/00 , C09J 3/14**

(30) Priorität: **03.12.87 DE 3740934**

(43) Veröffentlichungstag der Anmeldung:
**07.06.89 Patentblatt 89/23**

(84) Benannte Vertragsstaaten:
**AT BE CH DE FR GB IT LI LU NL SE**

(71) Anmelder: **RHEIN-CHEMIE RHEINAU GMBH**
**Postfach 81 04 09 Mülheimer Strasse 24-28**
**D-6800 Mannheim 81(DE)**

(72) Erfinder: **Armin, Bauer, Dr.**
**Neulussheimer Weg 9**
**D-6835 Brühl(DE)**
Erfinder: **Punessen, Rudolf, Dipl.-Ing.**
**Uhlandstrasse 7**
**D-6835 Brühl(DE)**
Erfinder: **Schuster, Peter**
**Stephanienufer 3**
**D-6800 Mannheim 1(DE)**

(74) Vertreter: **Gremm, Joachim, Dr. et al**
**Bayer AG Konzernverwaltung RP**
**Patentabteilung**
**D-5090 Leverkusen, Bayerwerk(DE)**

(54) **Mehrschichtenverbund.**

(57) Haftvermittler zur Herstellung eines dauerhaften Verbundes zwischen einer Polyurethanschaum-Schicht und einer Deckschicht aus Polyacrylat.

**EP 0 318 797 A2**

## Mehrschichtenverbund

Gegenstand der Erfindung ist ein Haftvermittler bestehend aus einem Reaktionsprodukt eines Methacrylamidharzes mit Clycidethern. Der Haftvermittler verbindet eine Polyurethanschaumschicht mit einer Deckschicht aus Polyacrylat fest und dauerhaft.

Polyurethanschaum, insbesondere harter Polyurethanschaum, wird in Bauwesen auch für den Außeneinsatz, z.B. zur Abdichtung von Flachdächern, verwendet. Da Polyurethan nicht unbegrenzt witterungsfest ist, muß der Schaum mit einer witterungsbeständigen Deckschicht versehen werden. Dafür sind Polyacrylate, insbesondere Methylmethacrylat und -homo-Copolymerisate besonders geeignet.

Die verwendeten Polyacrylate liegen als wäßrige Suspensionen vor. Wäßrige Einstellungen werden gegenüber lösungsmittelhaltigen mit Rücksicht auf die Umwelt bevorzugt. Wäßrige Einstellungen benötigen jedoch zur Haftung auf dem hydrohoben Hartschaum einen Haftvermittler.

Die Polyacrylat-und die Haftvermittlerschicht können mechanisch mit Pinseln oder Walzenrollen aufgebracht werden. Gebräuchlicher sind jedoch auch Vorrichtungen (z.B. Airless-Gerät), um die Schichten aufzuspritzen. Die Dicke der Haftvermittlerschicht beträgt 0,05-2 mm, vorzugsweise, 0,1-0,3 mm. Die Aushärtungszeit 1-10 Stunden, vorzugsweise 2-4 Stunden (je nach Umgebungstemperatur). Die Polyacrylatschicht härtet nach Verdampfen des Wassers aus.

Polyacrylatschichten haften aber auf Polyurethanschaum nicht ausreichend. Sie lösen sich leicht ab. Auch die Verwendung der bisher eingesetzten Haftvermittler löst das Problem eines dauerhaften Verbundes nicht zufriedenstellend.

Dies gilt insbesondere für Polyurethanschäume, die siliconhaltige Schaumstabilistaoren enthalten. Die unzureichende Haftfestigkeit zwischen den im allgemeinen hydrophoben und gegebenenfalls siliconhaltigen Polyurethanschäumen mit einer Vielzahl von Beschichtungen ist allgemein bekannt.

Es wurde gefunden, daß ein spezielles Methacrylamidharz, aufgebaut aus Methacrylsäure und Diethylentriamin mit einer Aminzahl von 400-600, vorzugsweise 500-550, oligomerisiert auf eine Viskosität von 1000-2000 mPa.sek., gemischt mit Bisphenol A-Glycidylether und gegebenenfalls einem weiteren Glycidylether auf Basis eines höhermolekularen Alkohols (diese Mischung wird im folgenden "Primer" gennant) einen festen und dauerhaften Verbund der Polyurethanschicht mit einer Polyacrylatdeckschicht bewirkt.

Das Gewichtsverhältnis von Methacrylamid-Harz zu Glycidylether beträgt 0,3 zu 0,7 bis 0,7 zu 0,3, vorzugsweise 0,55 zu 0,45 bis 0,45 zu 0,55.

Die einzusetzenden Polyurethanschäume, insbesondere harte Polyurethanschäume, sind bekannt. Bevorzugt ist ein Hartschaum für thermische Isolation, geschlossenzellig, flammfest ausgerüstet, Dichte von 20-100 kg/m$^3$, vorzugsweise 40-60 kg/m$^3$, mechanisch beanspruchbar, witterungsfest, pigmentiert, im allgemeinen siliconhaltige Substanzen enthaltend.

Die als Deckschicht verwendeten Polyacrylate sind harzartige Polymerisate, die durch Polymerisation eines oder mehrere monomerer Acrylate erhalten worden sind. Geeignete Monomere sind beispielsweise Methylacrylat, Ethylacrylat, Butylacrylat, 2-Ethylhexylacrylat, Methylmethacrylat, Ethylmethacrylat, Butylmethacrylat und Hexylmethacrylat. Auch Copolymerisate der Acrylate mit anderen Vinylmonomeren werden von dem Begriff Polyacrylat umfasst. Die Polyacrylate haben im allgemeinen ein Molekulargewicht von etwa 15 000 bis etwa 150 000 und bevorzugt ein spezifisches Gewicht von 1,35-2,3 und eine Zugfestigkeit von etwa 1050 kg pro cm$^2$ bis etwa 2100 kg cm$^2$.

Die mittels der erfindungsgemäßen Primerschicht erhaltenen Mehrschichten-Verbundkörper können im allgemeinen hergestellt werden, indem man eine Polyurethanschaumschicht zunächst mit der Primer-Schicht überzieht. Hierzu mischt man die Primer-Komponenten und trägt die Mischung auf den Polyurethanschaum auf. Durch Reaktion der primären Aminogruppen mit den Glycidylethergruppen härtet die Primerschicht in etwa 3 bis 10 Stunden aus. Danach wird die Acrylatdeckschicht aufgebracht, wozu man im allgemeinen entweder das Polyacrylat als Lösung in einem organischen Lösungsmittel aufträgt und das Lösungmsittel verdampfen läßt oder vorteilhafter, indem man das Acrylat als wäßrige Dispersion aufbringt, die durch Verdampfen des Wassers aushärtet.

Beispiel

Auswahl der Polymere

Komponente 1: Aminogruppenhaltiges Polyacrylamid

(Viskosität: 1500 mPa.sek)

Komponente 2: Bisphenol-A-Diglycidether

Glycidether eines höheren Alkohols.

Aus der Variation der Komponenten ergibt sich ein Optimum für die Haftung PU-Schaum/Polyacrylat, gemäß Rezeptur D:

| Geprüfte Rezepturen: | A | B | C | D | E | F | G |
|---|---|---|---|---|---|---|---|
| aminogruppenhaltiges Polyacrylat-Harz | 100 | 100 | 100 | 100 | 100 | 100 | 100 |
| Bisphenol-A-Diglycidether | 100 | 150 | 200 | 200 | 200 | 250 | 250 |
| Glycidether eines höheren Alkohols | - | - | - | 50 | 25 | 25 | 25 |
| Gelierzeit (2) | i.O. | i.O. | i.O. | i.O. | i.O. | i.O. | i.O. |
| Haftung Schaum/Coating (1) | 1 | 1 | 2 | 3 | 2 | 1 | 1 |

(1) 1 = schlecht
2 = mittel
3 = gut
(2) i.O. = 2-4 h auf Fläche (Polyurethanschaum) aufgetragen

Die optimale Haftfestigkeit aus Rezeptur D wurde folgendem Wechsellagerungszyklus unterworfen, um die Haftfestigkeit unter verschärften Anwendungsbedingungen zu untersuchen. Es wurden entsprechende Prüfkörper folgender Tempertur Wechsellagerung ausgesetzt:
1. Tag - Lagerung unter Wasser (Eis) -25° C
2. Tag - auftauen und trocknen RT bis 60° C
3. Tag - Lagerung unter Wasser (Eis) -25° C
usw.
Dauer: 50 Tage
nach Trocknung jeweils Prüfung der Haftung.

Ergebnis:

Haftfestigkeit immer größer als Zugfestigkeit der Acrylatbeschichtung. Ein Einfluß einer Pigmentierung der Acrylatbeschichtung mit anorganischen Pigmenten wurde nicht festgestellt. Organische Pigmente sind für die Praxis von geringer Bedeutung für diesen Anwendungsbereich.

**Ansprüche**

1. Haftvermittlerschicht zur Herstellung eines dauerhaften Verbundes zwischen einer Polyurethanschaumschicht und einer Deckschicht aus Polyacrylat, bestehend aus einem Reaktionsprodukt eines Amino-Gruppen enthaltenden Polyacrylamids mit Glycidethern.
2. Amino-Gruppen-haltiges Polyacrylamid nach Anspruch 1, hergestellt aus Methacrylsäure und Diethylentriamin, mit einer Amidzahl von 400-600, vorzugsweise 500-550, soweit oligomerisiert, daß eine Viskosität von 500-5000 mPa•sec., vorzugsweise 1000-2000 mPa•sec. erreicht ist.